Europäisches Patentamt

European Patent Office

Office européen des brevets

(11) Publication number: **0 014 587**
**B1**

# EUROPEAN PATENT SPECIFICATION

(45) Date of publication of patent specification: **01.02.84**　(51) Int. Cl.³: **F 16 D  23/14**

(21) Application number: **80300344.1**

(22) Date of filing: **06.02.80**

(54) Clutch release mechanism.

<table>
<tr><td>

(30) Priority: **06.02.79 GB  7904056**

(43) Date of publication of application:
**20.08.80 Bulletin 80/17**

(45) Publication of the grant of the patent:
**01.02.84 Bulletin 84/5**

(84) Designated Contracting States:
**BE DE FR IT LU NL SE**

(56) References cited:
**FR - A - 1 597 553**
**FR - A - 2 183 472**
**FR - A - 2 345 621**
**FR - A - 2 347 571**
**FR - A - 2 364 364**
**GB - A - 2 006 377**

</td><td>

</td></tr>
</table>

(73) Proprietor: **RHP Group plc**
**New Street**
**Chelmsford Essex CM1 1PU (GB)**

(72) Inventor: **Tune, George Albert**
**79 Bell Lane**
**Ackworth, Nr. Pontefract Yorkshire (GB)**

(74) Representative: **Barnard, Eric Edward et al,**
**BROOKES & MARTIN High Holborn House 52/54**
**High Holborn**
**London WC1V 6SE (GB)**

Courier Press, Leamington Spa, England.

Clutch release mechanism

The present invention relates to clutch release mechanisms incorporating rolling element bearing assemblies.

It is well known to employ a rolling element bearing assembly as a thrust bearing in the clutch release mechanism for a motor vehicle clutch. In one known conventional form of mechanism, the axis of rotation of the bearing assembly is constrained to be substantially coincident with the transmission shaft, which may or may not be coincident with the axis of rotation of the clutch on final vehicle assembly. Customarily, one race or ring of the bearing assembly is rotatable, relative to the other and is engageable directly, or indirectly by means of a suitable adapting element, with an associated contact surface of the clutch under an axial thrust force to effect clutch release. Considerable frictional sliding, scuffing and hence wear, heat and noise generation, can be produced as a result of the contact between the contacting surfaces, if slight misalignment or non-coincidence of the axes of rotation occurs.

As described in UK Patent Specification 1478612, it is possible to provide a positive drive location by means of projections on one contacting surface engaging with slots in the other surface so that, inter alia, wear due to circumferential sliding can be reduced. Nevertheless, slight misalignment or non-coincidence of the rotational axes can still occur.

In another known form of mechanism described in UK Patent Specification 1126058, the axis of rotation of the bearing assembly is not constrained as aforementioned, and the entire bearing assembly can be displaced radially to ensure coincidence between the respective axes of rotation. In order to retain the bearing assembly in the desired locations, an axially directed spring force is applied to the end faces of the non-rotating bearing race to produce a 'frictional grip'. It has been found that if any oil of grease should become present in the vicinity of the end faces, the frictional force locating the bearing can be reduced and the assembly can slip out of the concentric position.

French patent specification 2364364 describes further types of clutch release mechanisms which all employ a deformable solid visco-elastic member which is located in a chamber and which undergoes material deformation when the bearing assembly becomes aligned.

Japanese published patent application 53-81862 describes self-aligning clutch release mechanisms of the type with which the present invention is concerned. More particularly, such mechanisms employ a rolling-element bearing assembly including a rotatable race (10) which in use serves to transmit force to a clutch, another race (12) which is normally stationary and to which force is applied and an annular chamber (24) containing a flowable filler medium defined radially adjacent to the other race (12) which changes shape when the assembly becomes aligned. In these prior mechanisms the filler medium in contained in an elastomeric tube and this tube has a plurality of individual chambers therein and restriction means between the chambers impedes the free flow of the filler medium and controls the flow of the filler medium when the assembly (10, 12) become aligned. The threshold force which needs to be exceeded to permit the assembly (10, 12) to become aligned is determined by the restriction imposed on the flow of the filler medium.

A general object of the present invention is to provide an improved form of clutch release mechanism. The reference numerals in parentheses in the passage above and in the claims relate to features identified in the accompanying drawings and are used merely by way of examples to assist the understanding of the invention.

In accordance with the invention the filler medium which is contained in the chamber (24) which is sealed or in a flexible sealed ring member (34) in the chamber (24) is characterized in that it is flowable around the entire chamber (24) or the ring member (34) substantially without restriction so that the threshold force which it is necessary to exceed to cause the alignment is defined by the flow properties of the filler medium itself. This is a much simpler arrangement and has the added advantage that the filler medium can dampen vibration.

As is known, a preferred clutch release mechanism made in accordance with the invention employs a bearing assembly composed of inner and outer rings or races (10, 12) with rolling elements (13) therebetween and, as is known, the bearing assembly may employ a cage (14) for locating the rolling elements (13), and seals (15) for retaining lubricant in the assembly and for preventing the ingress of contaminants. One of the races (10) is intended to rotate and contact part of an associated clutch directly or indirectly to impart thrust force therein for clutch release. The other race (12) is preferably guided for axial movement in response to said force and the annular chamber (24) is defined radially adjacent the other race. This chamber (24) can change shape to assume a symmetrical or asymmetrical profile relative to the axis of rotation of the assembly. Hence, the entire bearing assembly consisting of the inner and outer races (10, 12), the cage (14) the seals (15) and the rolling elements (13) can be displaced, within permitted limits, radially to allow the bearing axis of rotation to become precisely coincident with the axis of rotation of the clutch and this involves corresponding displacement of

**0014587**

the filler medium around the chamber (24) of the ring member (34).

Features relating to particular embodiments of the invention are set out in the dependent claims.

The present invention may be understood more readily and various other features and aspects of the invention may become apparent from consideration of the following description:

The aforementioned chamber or the ring member can be pre-filled during assembly with the flowable filler medium which is readily deformable and is preferably a pseudo-plastic, i.e. a non-Newtonian fluid, with minimal thixotropic and visco-elastic characteristics at the normal working temperature of the release mechanism. The filler medium should preferably exhibit substantial creep flow properties under shear force exceeding its shear yield limit. In this way a controlled threshold force can be applied to the bearing assembly to cause the filler medium to flow and displace to permit adjustment of the bearing assembly. Thus, if the axis of the bearing assembly or release mechanism made in accordance with the invention becomes offset from the axis of the clutch during vehicle assembly, or subsequently, frictional force between the bearing assembly and the contacted release part of the clutch will tend to cause radial displacement of the bearing assembly and a corresponding flow of the filler medium until re-alignment is established.

It is preferable also that the filler medium exhibits minimal gravity-levelling. Once the bearing assembly has been displaced to achieve coincidence between its axis and that of the clutch, the bearing assembly will remain in its setting unless compelled by a new force to adopt a fresh location.

There is always a certain resistance to radial displacement when the threshold force is not exceeded which tends to hold the bearing assembly in position despite vibration or shock. The filler medium also provides a certain degree of damping and memory. Preferred forms of filler medium are viscous fluids or substances with a viscosity typically in the order of a few hundred Pa.s. At present, certain commercial grades of grease are considered suitable as the filler medium and particularly silicone greases such as that marketed under the trade name "Silkolene G44".

Embodiments of the invention will now be described by way of examples only, with reference to the accompanying drawings, wherein:—

Figure 1 is a sectional side view of a clutch release mechanism with a bearing assembly constructed in accordance with the invention;

Figure 2 is an end view of the mechanism shown in Figure 1;

Figure 3 is an enlarged detail side view of part of the mechanism shown is Figure 1;

Figure 4 is an end view of the part of the mechanism shown in Figure 3;

Figure 5 is an enlarged detail side view of part of the mechanism of Figure 1 and showing an additional modification thereto;

Figure 6 is a side view corresponding to Figure 5 but depicting the bearing assembly in a radially-displaced position;

Figure 7 is a schematic end view of the annular chamber of the mechanism corresponding positionally to Figure 5;

Figure 8 is a schematic end view of the annular chamber of the mechanisms corresponding positionally to Figure 6;

Figure 9 is an enlarged detail sectional side view of part of the mechanism of Figure 5 during assembly;

Figure 10 is a sectional side view of another clutch release mechanism with a bearing assembly constructed in accordance with the invention;

Figure 11 is a side view corresponding to Figure 10 but depicting the bearing assembly in a radially displaced position;

Figure 12 is a perspective view of a flexible tubular member used in the mechanism depicted in Figure 10;

Figure 13 is a cross-sectional view of the tubular member shown in Figure 12; and

Figure 14 is an end view of the tubular member of Figure 12 in the form as fitted in mechanism of Figure 10.

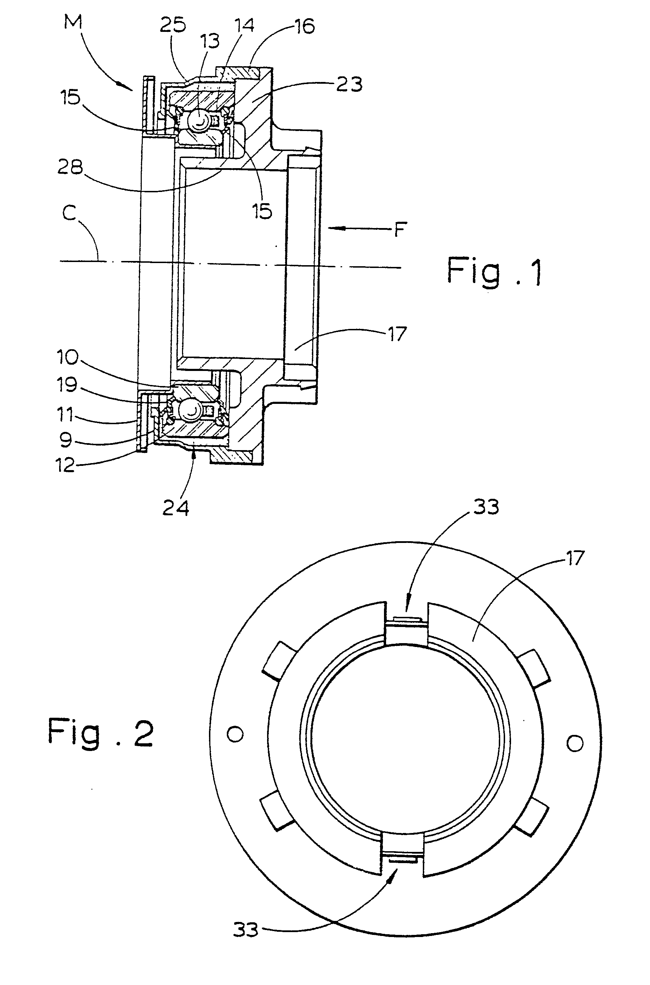

As shown in Figures 1 and 2, a clutch release mechanism generally denoted M employs a bearing assembly composed of an inner ring or race 10, an outer ring or race 12 and a plurality of rolling elements — here in the form of balls 13 therebetween. The rolling elements 13 are located and spaced with the aid of a cage 14.

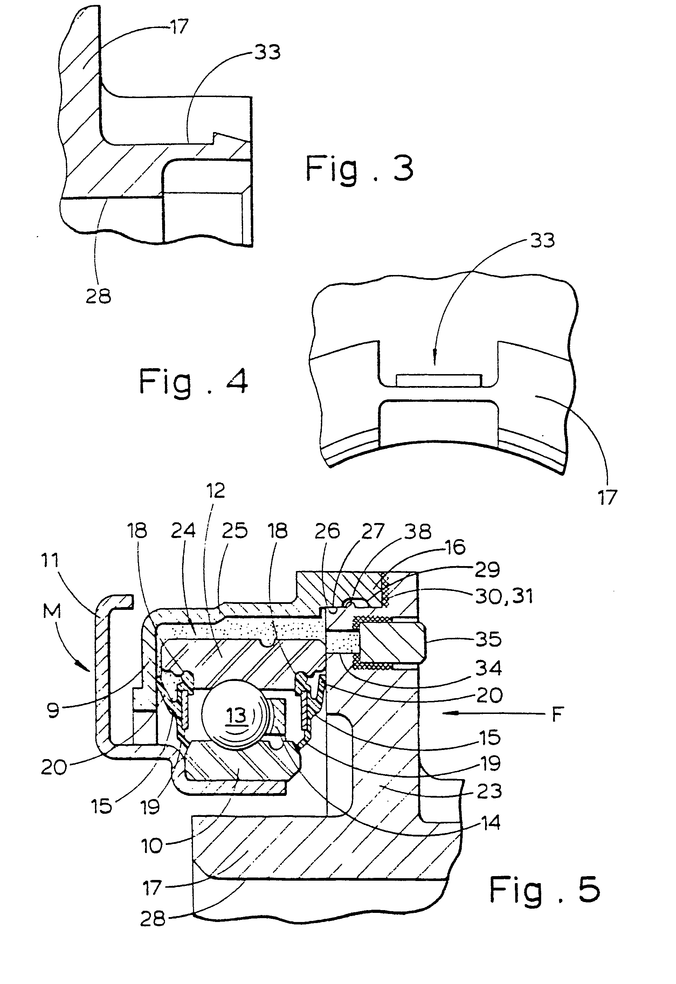

Flexible seals 15 seal and retain lubricant within the bearing assembly and protect the assembly from the ingress of contaminants. The seals 15, shown in more detail in Figure 5, are located in grooves 18 in the outer race 12 and have, inter alia, lips 19 which sealably contact the inner race 10. The inner race 10 is shown to be seated on a clutch-contacting adaptor 11 in the form of a pressing but this adaptor 11 is optional and in an analogous construction the race 10 is extended in the direction of the axis of rotation of the bearing assembly. The inner race 10 or its adaptor 11 is intended to contact a clutch release part, more usually a clutch diaphragm spring or a mechanical linkage acting on a clutch diaphragm or an analogous spring. It is also possible to provide a positive interconnection between a diaphragm spring of the clutch and the adaptor 11 or ring 10 as by projections and slots as described in U.K. Patent specification 1478612. A thrust sleeve or hub 17 has an axial portion extending freely within the race 10 and a radial flange 23 in sliding abutment with the outer race 13 of the bearing assembly. The hub 17 has its internal bore surface 28 slidably engaged on a guide surface of, for example, another sleeve (not shown) provided on the vehicle clutch assembly to surround the main transmission shaft. A cover or shroud 16 generally envelops the bearing assembly and is fitted to the flange 23 of the hub 17. The flange 23 and the cover 16 can be relieved and press-fitted together as represented in Figure 1. In a modified arrangement depicted in Figure 5, the cover 16 is permanently joined to the flange 23 of the hub 17 during assembly by bonding or welding, e.g. ultrasonically, as described hereafter. The cover 16 has a generally cylindrical body portion 25 extending generally parallel to the axis of rotation of the bearing assembly and a radial end wall 9 extending parallel to the flange 23. An annular chamber 24 which contains a filler medium as described is defined between the cylindrical body portion 25 of the cover 16 and the outer race 12. As shown in Figure 5, the seals 15 have further lips 20 contacting the interior of the cover end wall 9 and the flange 23 to close off the chamber 24.

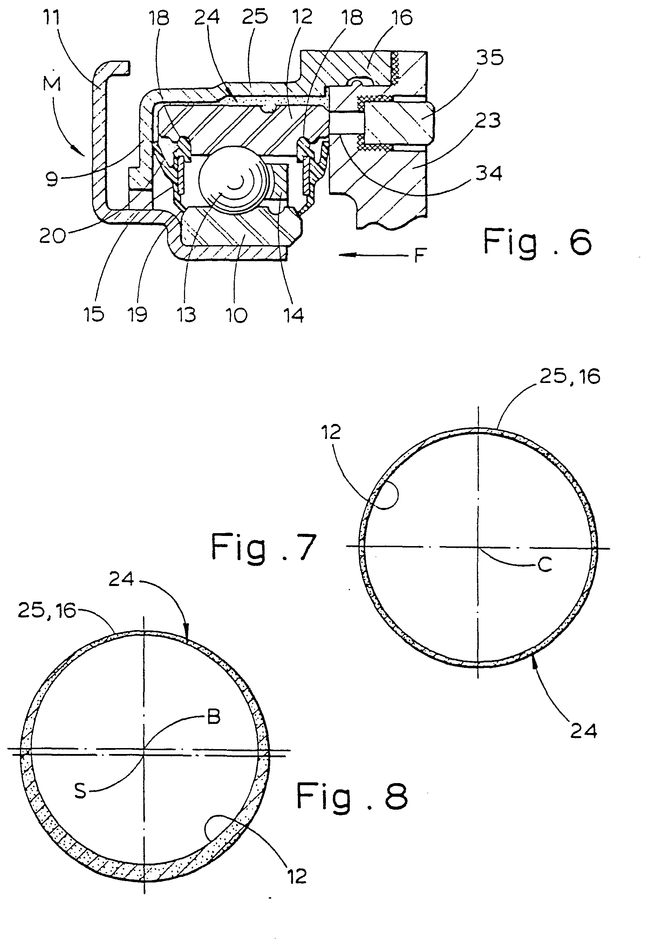

During operation, a further clutch actuator or lever mechanism (not shown) imparts an axial force 'F' to the hub 17 which is guided for slidable axial motion on the sleeve mentioned previously. The thrust force is then transmitted through the bearing assembly to effect clutch disengagement in generally known manner. As shown in Figures 2 and 3, the hub 17 has a shaped, e.g. relieved region 33 permitting the hub 17 and hence the mechanism M, to be snap-fitted to the clutch release actuator during vehicle assembly. Figures 5 and 7 depict the situation where the bearing assembly and the chamber 24 are both symmmetrical relative to the hub 17 and the rotational axis of the clutch and the bearing assembly of the release mechanism M are coincident. These coincident axes are denoted C in Figures 1 and 7. In contrast, Figures 6 and 8 depict the situation where the bearing assembly of the release mechanism M has been displaced radially relative to the hub 17 to align its rotation axis with the clutch axis. The axis of the bearing assembly is denoted B while the axis of the hub 17 is denoted S. Due to the alignment of the bearing assembly the chamber 24 assumes a asymmetrical shape and the filler medium in the chamber 24 becomes displaced. The filler medium can take a variety of forms but is preferably a fluid with characteristics as discussed previously.

As represented in Figure 5, the flange 23 of the hub 17 can have two holes 34 at diametrically opposed locations which permit the filling and venting of the chamber 24. Once the chamber 24 has been filled, the holes 34 can be sealed off by plugs 35. Conveniently, these plugs 35 are inserted in the holes 34 and bonded to the flange 23 by the application of heat or ultrasonic energy. Ths plugs 35 can be made from synthetic plastics or metal, e.g. as marketed under the trade name "Sonic-Lok".

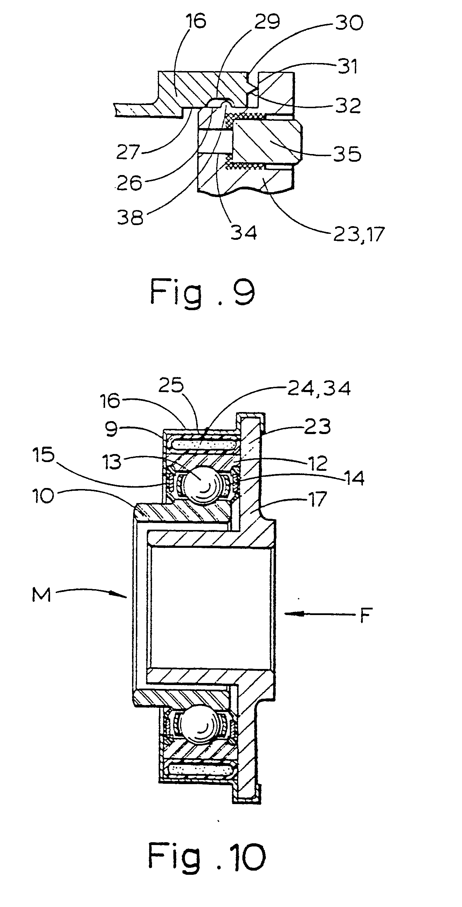

To provide a low cost mechanism suitable for mass production, the hub 17 and the cover 16 can be made from synthetic plastics particularly an injection moulded, rigid, high-density plastics material such as Nylon 66. As shown in Figures 5 and 9, the flange 23 of the hub 17 has a shoulder or spigot portion 26 which forms a sliding fit with an inner face 27 of the cover 16. The spigot portion 26 has a raised ridge 38 on its external periphery which engages as a snap-fit with a groove 29 in the face 27 of the cover 16. Naturally, the ridge 38 and the groove 29 could be reversed. The snap-fit between the hub 17 and the cover 16 serves to locate and retain these components together prior to bonding to join the faces 30, 31 of these components together. As shown in Figure 9, the cover has a protuberance 32 on the face 30 which absorbs energy and which therefore melts to fuse the faces 30, 31 together during welding when the cover 16 and the hub 17 are held together. It is also possible to fix the cover 16 and the hub 17 together as an interference fit (shear-type weld) especially where these components are made from crystalline polymer materials. It is also possible to fabricate a single component constituting both the hub 17 and the cover 16.

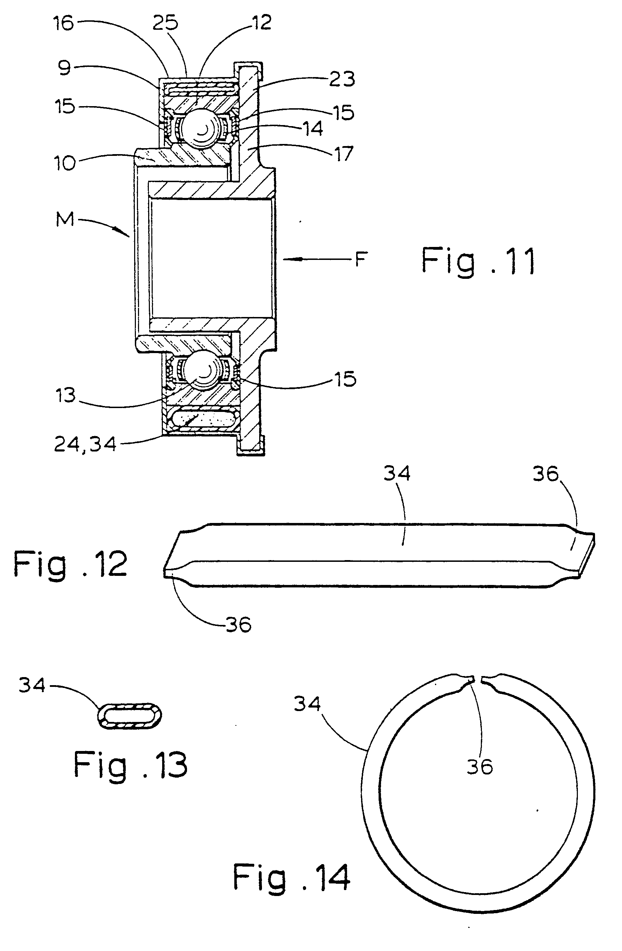

Figures 10 and 11 depict another embodiment of the invention where like reference numerals denote like or analogous parts to the other Figures. In this modified arrangement, the inner race 10 is axially prolonged so that the adaptor 11 is omitted, and the chamber 24 receives a flexible, sealed, tubular, envelope ring member 34 which itself contains the filler medium. The tubular member 34 is preferably a thin-walled structure of elliptical cross-section as shown in Figure 13. The member 34, which can be made from synthetic rubber or plastics can be produced by extrusion to form a tubular strip as shown in Figure 12. The tubular strip is then charged with the filler medium, shaped to ring form and heat sealed at its ends 36 as depicted in Figure 14. The length of the initially formed tube is made commensurate with the diameter of the raceway 12 and a range of lengths can be produced to cope with a range of bearing sizes. Instead of forming the member 34 as described, it is also possible to manufacture the member 34 directly as an annular component which is charged with the filler medium and sealed.

## Claims

1. A self-aligning clutch release mechanism employing a rolling-element bearing assembly including a rotatable race (10) which in use serves to transmit force to a clutch, another race (12) which is normally stationary and to which force is applied and an annular chamber (24) containing a flowable filler medium defined radially adjacent to the other race (12) which changes shape when the assembly (10, 12) becomes aligned to cause the filler medium to flow with the flow of the filler medium being controlled by the provision of restriction means within the chamber (24); characterised in that the filler medium is freely flowable around the entire chamber substantially without restriction and the threshold force which it is necessary to exceed to cause the alignment is defined by the flow properties of the filler medium itself.

2. A self-aligning clutch release mechanism employing a rolling-element bearing assembly including a rotatable race (10) which in use serves to transmit force to a clutch, another race (12) which is normally stationary and to which force is applied, an annular chamber (24) in which is arranged a flexible sealed tubular ring member (34) containing a flowable filler medium defined radially adjacent to the other race (12) which changes shape when the assembly (10, 12) becomes aligned to cause the filler medium to flow with the flow of the filler medium being controlled by the provision of restriction means within the ring member (34); characterised in that the filler medium is freely flowable around the ring member (34) substantially without restriction and the threshold force which it is necessary to exceed to cause the alignment is defined by the flow of properties of the filler medium itself.

3. A mechanism according to claim 1 or 2, wherein the inner race of the bearing assembly is the rotatable race (10) and the chamber (24) is defined between the other race (12) of the bearing assembly and an external cover or housing (16).

4. A mechanism according to claim 1 or 2, wherein the bearing assembly is supported by a thrust sleeve or hub (17) which is guided for axial displacement to impart said force to the bearing assembly.

5. A mechanism according to claim 3, wherein there is further provided a thrust sleeve or hub (17) which is displaceable to impart said force to the bearing assembly, the cover (16) being connected to, or integral with, a flange (23) of said hub (17).

6. A mechanism according to claim 5, wherein the chamber (24) is further defined between the flange (23) of the hub (17) and an end wall (9) of the cover (16).

7. A mechanism according to claim 4, 5 or 6, wherein the hub (17) is adapted for snap-fitting engagement with a clutch release actuator.

8. A mechanism according to claims 6 or 7, wherein the bearing assembly is provided with flexible seals (15) which have lips (20) engaged with the end wall (9) of the cover (16) and the flange (23) of the hub (17).

9. A mechanism according to any one of claims 1 to 8, wherein the filler medium is a grease.

10. A mechanism according to claims 1 or 2, wherein the other race (12) is supported by a hub member (17), to which axial force is applied, the chamber (24) lies radially inside or outside the bearing assembly and adjacent the other race (12) and the filler medium is a liquid.

**Revendications**

1. Mécanisme de débrayage à alignement automatique qui se sert d'un palier à rouleaux qui comprend: un chemin de roulement (10) rotatif, qui, en service, est utilisé pour transmettre une force à un embrayage; un chemin de roulement (12) additionnel, normalement immobile, auquel une force est appliquée; et une chambre annulaire (24) qui contient un agent de chargement coulant qui est délimité radialement près du chemin de roulement (12) additionnel, dont la forme se modifie quand l'assemblage (10, 12) s'aligne pour faire couler l'agent de chargement avec le coulement de l'agent de chargement qui est en train d'être maîtrisé par la provision d'un moyen restrictif dans la chambre (24), lequel mécanisme est caractérisé en ce que l'agent de chargement peut couler librement autour de la chambre entière substantiellement sans restriction, et la force de seuil, qui doit être depassé pour effectuer l'alignement, est définie par les propriétés de coulement de l'agent de chargement lui-même.

2. Mécanisme de débrayage à alignement automatique qui se sert d'un palier à rouleaux qui comprend: un chemin de roulement (10) rotatif, qui, en service, est utilisé pour transmettre une force à un embrayage; un chemin de roulement additionnel, normalement immobile, auquel une force est appliquée; et une chambre annulaire (24) dans laquelle est posé un dispositif (34) annulaire, tubulaire, scellé et souple qui contient un agent de chargement coulant qui est délimité radialement près du chemin de roulement (12) additionnel, dont la forme se modifie quand l'assemblage (10, 12) s'aligne pour faire couler l'agent de chargement avec le coulement de l'agent de chargement qui est en train d'être maîtrisé par la provision d'un moyen restrictif dans le dispositif annulaire (34), lequel mécanisme est caractérisé en ce que l'agent de chargement peut couler librement autour du dispositif annulaire (34) substantiellement sans restriction, et la force de seuil, qui doit être dépassé pour effectuer l'alignement, est définie par les propriétés de coulement de l'agent de chargement lui'même.

3. Mécanisme selon l'une ou l'autre des revendications 1 et 2, dans lequel le chemin de roulement intérieur de l'assemblage palier est le chemin de roulement rotatif (10), et la chambre (24) est délimitée entre le chemin de roulement additionnel (12) de l'assemblage palier et un couvercle ou boitier extérieur.

4. Mécanisme selon l'une ou l'autre des revendications 1 et 2, dans lequel l'assemblage palier est soutenu par un manchon de poussée ou moyeu (17), qui est guide pour se déplacer axialement afin d'appliquer ladite force à l'assemblage palier.

5. Mécanisme selon la revendication 3, dans lequel on fournit en outre un manchon de poussée ou moyeu (17), qui se déplace afin d'appliquer ladite force à l'assemblage palier, le couvercle (16) se trouvant attaché à ou solidaire d'une bride (23) dudit mayeu (17).

6. Mécanisme selon la revendication 5, dans lequel la chambre (24) est en outre délimitée entre la bride (23) du moyeu (17) et la paroi extrême (9) du couvercle (16).

7. Mécanisme selon l'une des revendications 4, 5 et 6, dans lequel le moyeu (17) est adapté à être engagé à pression dans un dispositif de débrayage.

8. Mécanisme selon l'une ou l'autre des revendications 6 et 7, dans lequel l'assemblage palier comprend des éléments d'etanchéité (15) souples, qui présentent des lèvres (20) qui se mettent en prise avec la paroi extrême (9) du couvercle (16) et avec la bride (23) du moyeu (17).

9. Mécanisme selon l'une des revendications 1 a 8, dans lequel l'agent de chargement est une graisse.

10. Mécanisme selon l'une ou l'autre des revendications 1 et 2, dans lequel le chemin de roulement additionnel (12) est soutenu par un élément moyeu (17) auquel une force axiale est appliquée, la chambre (24) se trouve radialement en dedans, ou au dehors, de l'assemblage palier et près du chemin de roulement additionnel (12), et l'agent de chargement est un liquide.

**Patentansprüche**

1. Selbstzentrierende Kupplungausrückvorrichtung mit einem Wälzlager, welches enthält: einen drehbaren Laufring (10), der im Gebrauch zur Kraftübertragung auf eine Kupplung dient; einen anderen Laufring (12), der normalerweise feststeht und auf den Kraft ausgeübt wird; eine ringförmige Kammer (24), die ein fließfähiges Füllmittel enthält, welches den anderen Laufring (12) radial benachbart umgibt und seine Gestalt verändert, wenn die Einrichtung (10, 12) sich zentriert und das Füllmittel zum Fließen veranlaßt, wobei das Fließen des Füllmittels durch die Anordnung von Rückhaltemitteln in der Kammer (24) gesteuert wird, dadurch gekennzeichnet, daß das Füllmedium um die gesamte Kammer im wesentlichen ohne Beschränkung frei fließen kann und daß der Kraftschwellenwert, der überschritten werden muß, um die Zentrierung zu bewirken, durch die Fließeigenschaften des Füllmediums selbst bestimmt wird.

2. Selbstzentrierende Kupplungsuasrückvorrichtung mit einem Wälzlager, das enthält: einen drehbaren Laufring (10), der bei Betätigung zur Kraftübertragung auf eine Kupplung dient; einen anderen Laufring (12), der normalerweise feststeht und auf den Kraft ausgeübt wird; eine ringförmige Kammer (24) in der ein biegsames, abgedichtetes, rohrförmiges Ringelement (34) angeordnet ist, das ein fließfähiges Filtermedium enthält, das an den anderen Laufring (12) radial anschließend diesen umgibt und seine Gestalt verändert, wenn sich die Einrichtung (10, 12) zentriert und das Füllmedium zum Fließen veranlaßt, wobei das Fließen des Füllmittels durch die Anordnung von Rückhaltemitteln im Inneren des Ringelementes (34) gesteuert wird, dadurch gekennzeichnet, daß das Füllmittel um das Ringelement (34) im wesentlichen ohne Beschränkung frei fließen kann und daß der Kraftschwellenwert, der über schritten werden muß, um die Zentrierung zu bewirken, von den Fließeigenschaften des Füllmediums selbst bestimmt wird.

3. Vorrichtung nach Anspruch 1 oder 2, bei der der innere laufring des Lagers der drehbare Laufring (10) ist, und die Kammer (24) zwischen dem anderen Laufring (12) des Lagers und einer äußeren Abdeckung oder einem Gehäuse (16) gebildet wird.

4. Vorrichtung Anspruch 1 oder 2, bei der das Lager von einer Druckbüchse oder -nabe (17) getragen wird, die zu ihrer Axialverstellung geführt wird, um die genannte Kraft auf das Lager zu übertragen.

5. Vorrichtung nach Anspruch 3, bei der außerdem eine Druckbüchse oder -nabe (17) vorgesehen ist, die verschiebbar ist, um die genannte Kraft auf das Lager zu übertragen und wobei die Abdeckung (16) mit einem Flansch (23) der genannten Nabe (17) verbunden ist oder mit ihr ein Ganzes bildet.

6. Vorrichtung nach Anspruch 5, bei der die Kammer (24) außerdem zwischen dem Flansch (23) der Nabe (17) und einer Stirnwand (9) der Abdeckung (16) angeordnet ist.

7. Vorrichtung nach Anspruch 4, 5 oder 6, bei der die Nabe (17) für eine Schnappverbindung mit einem Kupplungsausrückbetätigungselement geeignet ist.

8. Vorrichtung nach Anspruch 6 oder 7, bei der das Lager mit biegsamen Dichtungen (15) versehen ist, welche Lippen (20) aufweisen, die an der Stirnwand (9) der Abdeckung (16) und am Flansch (23) der Nabe (17) anliegen.

9. Vorrichtung nach einem der Ansprüche 1 bis 8, bei der das Füllmedium ein Fett ist.

10. Vorrichtung nach Anspruch 1 oder 2, bei der der andere Laufring (12) von einer Nabe (17) getragen wird, auf die eine Axialkraft ausgeübt wird, bei der die Kammer (24) radial auf der Innenseite oder auf der Außenseite des Lagers und neben dem anderen Laufring (12) liegt und bei der das Füllmedium eine Flüssigkeit ist.

Fig . 1

Fig . 2

Fig . 3

Fig . 4

Fig . 5

0 014 587

Fig . 6

Fig . 7

Fig . 8

3

Fig . 9

Fig . 10

4

Fig .11

Fig .12

Fig .13

Fig .14